**Europäisches Patentamt**

**European Patent Office**

**Office européen des brevets**

(11) Veröffentlichungsnummer: **0 246 568**
**B1**

(12) **EUROPÄISCHE PATENTSCHRIFT**

(45) Veröffentlichungstag der Patentschrift:
**12.07.89**

(21) Anmeldenummer: **87107047.0**

(22) Anmeldetag: **15.05.87**

(51) Int. Cl.⁴: **G01G 13/00**, G01G 11/04,
**B29C 47/92**

(54) Waage für die Massendurchsatzerfassung im Einlauf eines Extruders.

(30) Priorität: **22.05.86  DE 3617200**

(43) Veröffentlichungstag der Anmeldung:
**25.11.87 Patentblatt 87/48**

(45) Bekanntmachung des Hinweises auf die Patenterteilung:
**12.07.89 Patentblatt 89/28**

(84) Benannte Vertragsstaaten:
**AT BE CH DE FR GB IT LI LU NL SE**

(56) Entgegenhaltungen:
**DE-A- 1 549 291**
**DE-A- 3 140 965**
**DE-C- 3 542 560**
**US-A- 4 111 336**

**KUNSTSTOFFBERATER, Band 29, Nr. 4, April 1984,
Seiten 20-23, Frankfurt, DE; P. FISCHER: "Stand der
Einschneckenextruder in Europa"**

(73) Patentinhaber: **INOEX GmbH, Borgweg 27, D-4970 Bad
Oeynhausen 1(DE)**

(72) Erfinder: **Riediger, Roland, Hellerweg 40,
D-4900 Herford(DE)**
Erfinder: **Neumann, Ulrich, Im Kerksiek 10, D-4970 Bad
Oeynhausen 1(DE)**

(74) Vertreter: **Patentanwaltsbüro Cohausz & Florack,
Postfach 14 01 20, D-4000 Düsseldorf 1(DE)**

**Beschreibung**

Die Erfindung bezieht sich auf eine Waage für die Massendurchsatzerfassung im Einlauf eines Extruders, bestehend aus einem mit dem zu extrudierenden Material füllbaren Waagebehälter mit einer Wägeeinrichtung und einem Auswertgerät für die von der Wägeeinrichtung gelieferten Meßwerte und aus einem dem Einlauf des Extruders vorgeordneten und zum Einlauf hin offenen, insbesondere trichterförmigen Behälter, in den der Inhalt des Waagebehälters chargenweise entleerbar ist.

Bei der Herstellung von extrudierten Produkten spielt die Massendurchsatzerfassung eine wesentliche Rolle. Nur bei exakter Massendurchsatzerfassung ist es möglich, das Produkt unter Einhaltung der Toleranzgrenzen mit einem Minimum an Materialeinsatz herzustellen. Um korrigierend in den Herstellungsprozeß eingreifen zu können, strebt man eine möglichst unmittelbare Erfassung von Änderungen des Massendurchsatzes an. Mit den bekannten Waagen für die Massendurchsatzerfassung läßt sich der Massendurchsatz noch nicht schnell genug exakt erfassen (DE-35 42 560 A1).

Bei einer bekannten Waage der eingangs genannten Art sitzt der zum Einlauf hin offene, trichterförmige Behälter fest auf dem Einlauf des Extruders. Wenn beim Extrudieren das Niveau des im Behälter befindlichen, zu extrudierenden Materials bis auf ein unteres vorgegebenes Niveau abgesunken ist, gibt ein Niveauschalter ein Signal zum Entleeren des inzwischen gefüllten Waagebehälters. Der Waagebehälter wird nach Entleeren erneut gefüllt und steht dann für die nächste Entleerung zur Verfügung. Dieser Vorgang wiederholt sich ständig. Die Taktzeit der Entleerung des Waagebehälters schwankt in der Praxis in weiten Grenzen zwischen ca. 15 und 60 Sekunden. Zwar läßt sich über das exakt zu messende Gewicht einer jeden Charge im Waagebehälter der durchschnittliche Massendurchsatz für die jeweilige Taktzeit von 15 Sekunden und mehr vom Auswertgerät genau angeben, doch kann es innerhalb dieser Taktzeiten zu erheblichen Schwankungen im Massendurchsatz kommen. Deshalb ist eine solche Waage ungenügend geeignet, für die Automatisierung des Extruderbetriebes geeignete Meßwerte für den Massendurchsatz zu liefern.

Bei einer anderen bekannten Waage findet dagegen eine kontinuierliche Gewichtserfassung statt. Bei dieser bekannten Waage ist ein als Trichter ausgebildeter Waagebehälter über dem Einlauf des Extruders frei aufgehängt. Eine diesem Behälter zugeordnete Wägeeinrichtung liefert an ein Auswertgerät kontinuierlich Meßwerte. Das Auswertgerät ermittelt aus diesen Meßwerten die Gewichtsveränderung in der Zeiteinheit, also den Massendurchsatz des Extruders. Dieser Massendurchsatz ist aber verfälscht, denn durch den ununterbrochenen Materialfluß aus dem frei aufgehängten Behälter zu dem fest installierten Einlauf ist der Behälter trotz seiner freien Aufhängung nicht frei, sondern mit dem Einlauf gekoppelt. Deshalb ist der vom Auswertgerät gelieferte Massendurchsatz nur ein relativer und kein absoluter Wert. Für die Automatisierung des Extruderbetriebes unter Einhaltung enger Toleranzen ist deshalb auch diese Waage nicht geeignet.

Der Erfindung liegt die Aufgabe zugrunde, eine Waage zu schaffen, die für die Automatisierung des Extruderbetriebes verwertbare Werte für den Massendurchsatz liefert.

Diese Aufgabe wird bei einer Waage der eingangs genannten Art dadurch gelöst, daß der zum Einlauf hin offene Behälter an einer Wägeeinrichtung frei aufgehängt oder abgestützt und nur über den Materialstrom mit dem Einlauf gekoppelt ist und daß das Auswertgerät den bei kontinuierlicher Erfassung dieser von der Wägeeinrichtung gelieferten Meßwerte und durch Differenzierung dieser Meßwerte ermittelten relativen Massendurchsatz durch Berücksichtigung der von der Wägeeinrichtung des Waagebehälters bei jeder Entleerung erhaltenen Meßwerte für das absolute Materialgewicht in den absoluten Massendurchsatz umrechnet, indem der von der Wägeeinrichtung des Waagebehälters bei jeder Entleerung erhaltene Meßwert für das absolute Materialgewicht mit der Änderung (Differenz) der von der Wägeeinrichtung des zum Einlauf hin offenen Behälters gelieferten Meßwerte gleichgesetzt wird.

Bei der erfindungsgemäßen Waage liefert das Auswertgerät praktisch kontinuierlich Werte für den absoluten Massendurchsatz. Diese Werte sind für die Automatisierung des Extruderbetriebes unmittelbar verwertbar, weil sie aktuell und exakt sind. Mit ihrer Hilfe ist es möglich, unverzüglich in den Betrieb korrigierend einzugreifen, so daß das Fertigprodukt unter Einhaltung der unteren Toleranzgrenze mit geringstem Materialeinsatz hergestellt werden kann. Bei der Erfindung ist im Gegensatz zum gattungsbildenden Stand der Technik der untere Behälter nicht länger konstruktiv mit dem Einlauf des Extruders verbunden, sondern in an sich bekannter Weise an einer Wägeeinrichtung frei aufgehängt oder abgestützt, so daß er nur noch über den Materialstrom mit dem Einlauf gekoppelt ist. Diese Kopplung kann derart eng gewählt werden, daß sich kein undefinierbarer, in der Größe schwankender Stau vor dem Einlauf bilden kann. Deshalb ist es möglich, kontinuierlich eine Aussage über den Massendurchsatz zu gewinnen. Durch die Kombination dieser Gewichtsmessung mit der Gewichtsmessung des chargeweisen entleerbaren Waagebehälters erhält man kontinuierlich eine Aussage über den absoluten Massendurchsatz. Dabei dient der chargenweise entleerbare Waagebehälter mit seiner Wägeeinrichtung nur noch dazu, ein Eichsignal für den relativen Massendurchsatz des kontinuierlich entleerbaren anderen Waagebehälters mit Wägeeinrichtung zu liefern. Durch die wiederholte Berücksichtigung des absoluten Gewichtes des chargenweise entleerbaren Waagebehälters bei jeder Entleerung ist gewährleistet, daß die relativen Massendurchsatzwerte in genügend kurzen Abständen überprüft und gegebenenfalls korrigiert werden, so daß in den dazwischenliegenden Phasen die vom Auswertgerät gelieferten Werte für die Massendurchsatzerfassung ebenfalls exakt sind.

Im folgenden wird die Erfindung anhand einer ein Ausführungsbeispiel darstellenden Zeichnung näher erläutert.

Einer Extruderschnecke 1 wird über einen Einlauf 2 das zu extrudierende Material zugeführt. Auf diesem Einlauf 2 ist ein Traggestell 3 angeordnet. Eine Traverse 4 des Traggestells 3 trägt einen Füllstutzen 5. Aus diesem Füllstuszen können mittels eines steuerbaren Schiebers 6 dosierte Chargen in einen darunter hängend an der Traverse 4 angeordneten, trichterförmigen Waagebehälter 7 eingegeben werden. Die untere Öffnung des Waagebehälters 7 ist durch eine Klappe 8 verschlossen, die mittels eines Antriebes 9 geöffnet werden kann.

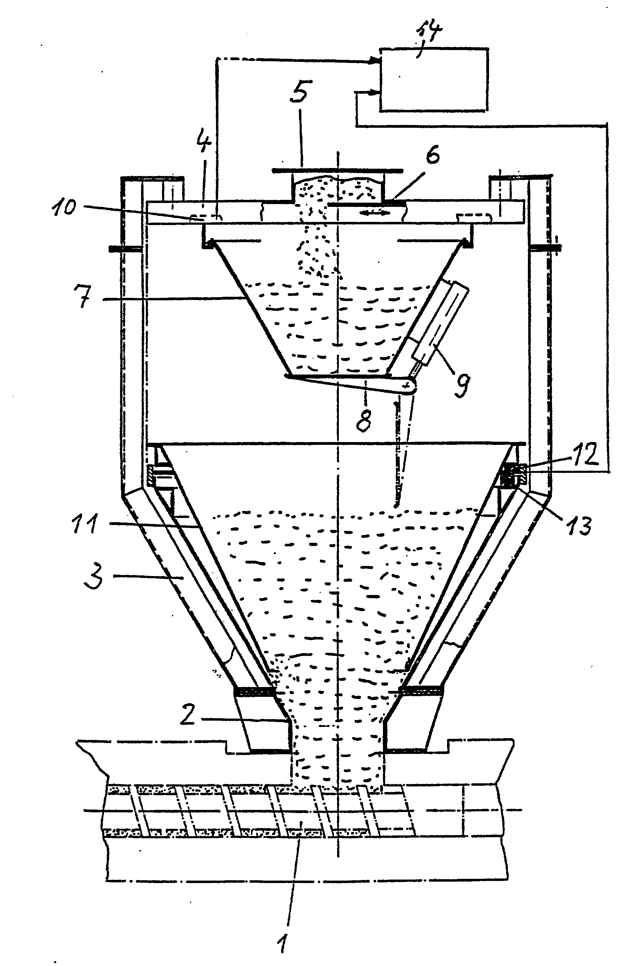

Dem Waagebehälter 7 ist eine in der Zeichnung nur angedeutet dargestellte, beispielsweise in der Traverse 4 untergebrachte Wägeeinrichtung zugeordnet, die z. B. in bekannter Weise aus Druckmeßdosen 10 bestehen kann.

Unterhalb des Waagebehälters 7 befindet sich ein weiterer trichterförmiger Waagebehälter 11, der im Traggestell 3 frei aufgehängt bzw. auf Druckmeßdosen 12 einer Wägeeinrichtung abgestützt ist. Zusätzliche Schwingungsdämpfer 13 verhindern, daß Schwingungen des Behälters 11 den Wägevorgang beeinträchtigen. Der unten offene Waagebehälter 11 mündet in den Einlauf 2, ist mit diesem aber nicht unmittelbar, sondern nur über den Strom des auszutragenden Materials gekoppelt.

Ein Auswertgerät 14 erhält von den als Druckmeßdosen ausgebildeten Wägeeinrichtungen 10,12 Meßwerte für das Füllgewicht des Waagebehälters 7 und des Waagebehälters 11. Das Auswertgerät 14 ermittelt durch Differenzbildung der kontinuierlich empfangenen Meßwerte für das augenblickliche Füllgewicht des Waagebehälters 11 den Massendurchsatz (Gewichtsabnahme pro Zeiteinheit) und korrigiert (eicht) diesen Wert mit dem bei jeder Entleerung des Waagebehälters 7 von der Wägeeinrichtung 10 gelieferten Meßwert für das absolute Gewicht. Eine solche Korrektur ist deshalb leicht möglich, weil bei Entleerung des Waagebehälters 7 sich auch die Meßwerte für den Waagebehälter 11 ändern, und zwar in einem solchen Maß, wie neues Material aus dem Waagebehälter 7 in den Waagebehälter 11 gefüllt wird.

Um die Ursache für festgestellte Massendurchsatzschwankungen zu ermitteln, kann das Auswertgerät 14 einen zusätzlichen Meßwert für das in den Waagebehälter 7 gefüllte Volumen erhalten. Dies kann in der Weise geschehen, daß der Schieber 6 kleine Chargen bestimmten Volumens in den Waagebehälter 7 eingibt und die Chargen pro Füllung des Waagebehälters 7 erfaßt werden. Aber auch mit anderen Dosiereinrichtungen, wie Zählrad, Dosierschnecke und dergleichen, läßt sich das eingegebene Volumen erfassen. Durch Berücksichtigung des volumenbezogenen Füllgewichtes des Waagebehälters 7 läßt sich dann eine Aussage darüber machen, ob die Massendurchsatzschwankungen rohmaterial- oder extruderbedingt sind. Die Kenntnis der Ursache ist für die Automatisierung und für Fehlererkennung von Bedeutung.

## Patentansprüche

1. Waage für die Massendurchsatzerfassung im Einlauf eines Extruders, bestehend aus einem mit dem zu extrudierenden Material füllbaren Waagebehälter mit einer Wägeeinrichtung und einem Auswertgerät für die von der Wägeeinrichtung gelieferten Meßwerte und aus einem dem Einlauf des Extruders vorgeordneten und zum Einlauf hin offenen, insbesondere trichterförmigen Behälter, in den der Inhalt des Waagebehälters chargenweise entleerbar ist, **dadurch gekennzeichnet**, daß der zum Einlauf (2) hin offene Behälter (11) an einer Wägeeinrichtung (12) frei aufgehängt oder abgestützt und nur über den Materialstrom mit dem Einlauf (2) gekoppelt ist und daß das Auswertgerät (14) die bei kontinuierlicher Erfassung der von der Wägeeinrichtung (12) gelieferten Meßwerte und den durch Differenzierung dieser Meßwerte ermittelten relativen Massendurchsatz in den absoluten Massendurchsatz umrechnet, indem der von der Wägeeinrichtung (10) des Waagebehälters (7) bei jeder Entleerung erhaltene Meßwert für das absolute Materialgewicht mit der Änderung (Differenz) der von der Wägeeinrichtung (12) des zum Einlauf (2) hin offenen Behälters (11) gelieferten Meßwerte gleichgesetzt wird.

2. Waage nach Anspruch 1, **dadurch gekennzeichnet**, daß das Auswertgerät (14) die von einer volumetrischen Meßeinrichtung (5,6) gelieferten Meßwerte für das in den Waagebehälter (7) eingegebene Material in Beziehung zum Massendurchsatz setzt.

## Claims

1. A weighing apparatus for determining the mass throughput in the inlet of an extruder, comprising: a first container which can be filled with the material to be extruded and has a weighing device; an evaluating apparatus for the measured values supplied by the weighing device; and a more particularly funnel-shaped container which is disposed upstream of the extruder inlet and is open in the direction thereof and into which the contents of the first container can be emptied in batches, characterized in that the tank (13) open in the direction of the inlet (2) is freely suspended from or borne on a weighing device (12) and is connected to the inlet (2) exclusively via the flow of material, and the evaluating apparatus (14) converts the continuously collected measured values supplied by the weighing device (12) and the relative mass throughput determined by differentiation of such measured values into the absolute mass throughput, by equating the measured value for the absolute weight of the material, obtained on each emptying from the weighing device (10) of the first container (7), with the change (difference) in the measured values delivered by the weighing device (12) of the container (11) open in the direction of the inlet (2).

2. A weighing apparatus according to claim 1, characterized in that the evaluating apparatus (14) puts the measured values for the material introduced into the first container (7), delivered by a volumetric measuring device (5, 6), into relation with the mass throughput.

## Revendications

1. Balance pour mesurer le débit d'une masse dans l'entrée d'un dispositif d'extrusion, constituée d'un récipient de balance pouvant être rempli par la matière à extruder avec un dispositif de pesée et un appareil d'exploitation pour les valeurs de mesure délivrées par le dispositif de pesée, et d'un récipient disposé en avant de l'entrée du dispositif d'extrusion et ouvert en direction de l'entrée, en particulier en forme d'entonnoir, dans lequel le contenu du récipient de balance peut être vidé en charges, caractérisée par le fait que le récipient (11) ouvert en direction de l'entrée (2) est suspendu librement à ou supporté par un dispositif de pesée (12) et n'est accouplé à l'entrée (2) que par le courant de matière, et que l'appareil d'exploitation (14) convertit le débit de masse relatif, déterminé par détection continue de ces valeurs de mesure délivrées par le dispositif de pesée (12) et différentiation de ces valeurs de mesure, en faisant intervenir les valeurs de mesure pour le poids absolu de matière obtenues à chaque vidange par le dispositif de pesée du récipient de balance, en le débit de masse absolu, par le fait que la valeur de mesure, obtenue par le dispositif de pesée (10) du récipient de balance (7) à chaque vidange, pour le poids absolu de matière est égalée à la modification (différence) des valeurs de mesure délivrées par le dispositif de pesée (12) du récipient (11) ouvert en direction de l'entrée (2).

2. Balance selon la revendication 1, caractérisée par le fait que l'appareil d'exploitation (14) relie au débit de masse les valeurs de mesure pour la matière introduite dans le récipient de balance (7) délivrée par un dispositif de mesure volumétrique (5, 6).